# EUROPEAN PATENT SPECIFICATION

(11) **EP 2 484 440 B1**
(45) Date of publication and mention of the grant of the patent: **27.04.2016**
(21) Application number: 12153586.8
(22) Date of filing: 02.02.2012
(51) Int. Cl.: B01J 23/18, B01J 27/057, B01J 37/00, B01J 37/02, F23G 5/027, C01B 19/00

(54) **USE OF A CATALYST FOR WASTE THERMOLYSIS**
VERWENDUNG EINES KATALYSATORS ZUR ABFALLTHERMOLYSE
UTILISATION D'UN CATALYSEUR POUR THERMOLYSE DES DÉCHETS

(30) Priority: 02.02.2011 IT BO20110043
(43) Date of publication of application: 08.08.2012
(73) Proprietor: Eonsudenergia S.r.l., 44042 Cento (Ferrara) (IT)
(72) Inventor: Galantini, Gilberto, 44042 Cento (Ferrara) (IT)
(74) Representative: Colò, Chiara

(56) References cited:
- GB-A- 1 558 656
- JP-A- 9 172 202
- JP-A- 11 186 616
- US-A- 4 183 803
- US-A- 5 614 038
- US-A1- 2004 217 333

## Description

The present invention relates to the use of a catalyst for waste thermolysis.

In particular, the present invention relates to the use of a catalyst suitable for accelerating thermolysis of urban solid waste carried out in plants for waste disposal by thermolysis.

In the field of waste disposal, increasing importance is given to solutions which are alternative to direct incineration. The latter reduces weight and volume of the waste, but is harmful due to release, into the environment, of polluting fumes and ash deriving from direct combustion of the waste itself.

Among the alternative solutions, a well-known solution of fundamental importance is waste thermolysis, a process which is capable of dissociating very complex and non-complex organic molecules, does not release polluting emissions (dioxin or others) and also enables the waste to be exploited from an energy standpoint by transforming the organic fraction into reusable combustible products, such as, in particular, gaseous hydrocarbon mixtures and carbonous material.

In disposal plants that use thermolysis, waste is fed to a reactor under a controlled atmosphere, in particular substantially in the absence of oxygen, and is heated at pre-established temperatures suitable for carrying out the thermolytic process (which prevents formation of pollutants such as dioxin and other harmful substances). The reactor is heated by means of burners which can use any type of fuel.

At the end of this process, as noted, reusable gaseous hydrocarbon mixtures and carbonous material are obtained from the organic fraction of the waste.

However, a disadvantage of this process consists in that the time necessary to complete an entire waste thermolysis cycle, from the moment in which the waste is introduced into the reactor until reusable combustible products are finally obtained, is currently very long and ranges between about eight and twelve hours.

Such long times clearly result in disadvantages also from a cost standpoint as concerns the construction and management of waste thermolysis plants (consider, for example, the huge quantities of gas required to heat the reactor by means of the burners for such long cycles), which are therefore scarcely cost effective.

US 4183803 discloses a process in which metals such as nickel, vanadium and iron contaminating a cracking catalyst are passivated by contacting the cracking catalyst under elevated temperature conditions with antimony selenide, antimony sulphide, antimony sulphate, bismuth selenide, bismuth sulphide, or bismuth phosphate.

GB 1558656 relates to a process for the catalytic incineration of hydrogen sulphide-containing waste gases by contacting said waste gases with a stoichiometric excess of oxygen with respect to the contained hydrogen sulphide in the presence of a catalyst.

US 5614038 discloses machinable lead free brasses for potable water applications, wherein a combination of bismuth and selenium are substituted in the alloy for lead and the bismuth and selenium are added to the alloy in the form of an additive product comprising bismuth selenide.

The technical task of the present invention is to solve the aforementioned problems by developing a catalyst which accelerates thermolysis of waste in disposal plants, so as to obtain reusable combustible products more quickly.

Within the scope of this task, an object of the invention is to provide a catalyst which thus enables the operating costs of waste thermolysis plants to be reduced.

A last but not least object of the present invention is to provide a catalyst that is simple to implement in practical terms and works effectively, and which is moreover competitive from a cost-effectiveness standpoint.

Said task and said objects are fulfilled by the use of a catalyst for waste thermolysis, comprising at least a selenium and bismuth alloy which is suitable for accelerating the thermolytic process of waste in plants for waste disposal by thermolysis, so as to quickly obtain reusable combustible products.

Further features and advantages of the invention will be more apparent from the description of a preferred, but not exclusive embodiment of a catalyst for waste thermolysis according to the invention, illustrated by way of non-restrictive example in the appended drawings, in which:

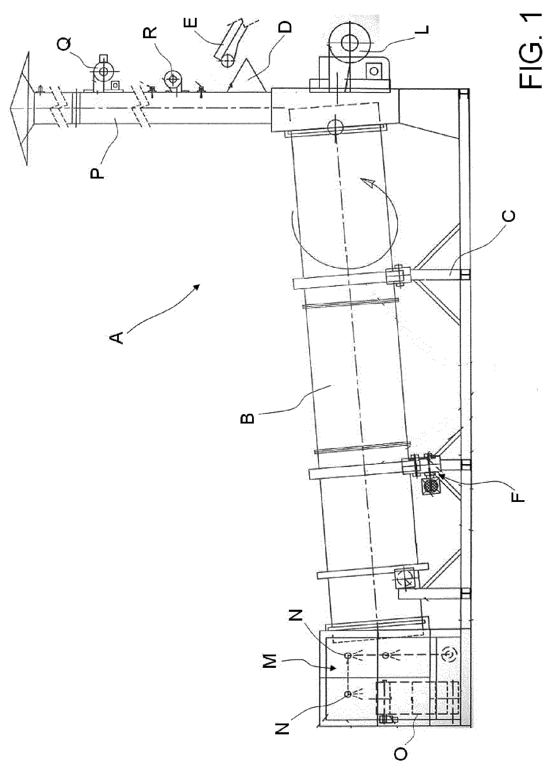

- figure 1 is a schematic side view of a waste thermolysis plant;
- figure 2 is a schematic detail view of the internal wall of a reactor of the plant, highlighting projecting elements lined with the catalyst, according to the present invention;
- figure 3 is an enlarged section detail view of a portion of a projecting element of the reactor lined with the catalyst, according to the present invention. With reference to the aforesaid figures, 1 indicates overall a catalyst for waste thermolysis, according to the present invention.

The catalyst 1 for waste thermolysis comprises at least a selenium and bismuth alloy which is suitable for accelerating the thermolytic process in plants A for waste disposal by thermolysis so as to quickly obtain reusable combustible products.

More in detail, the catalyst 1 consists of a selenium and bismuth alloy comprising a selenium percentage of between 70% and 99% and a bismuth percentage of between 1% and 30%.

Preferably, the catalyst 1 consists of a selenium and bismuth alloy comprising a selenium percentage of 83.48% and a bismuth percentage of 16.52%.

The catalyst 1 is obtained by crucible melting selenium and bismuth in a crucible.

The catalyst 1 is used in plants A for waste disposal by thermolysis, and in particular in the reactor B of the plant A, to accelerate the thermolytic process.

More in detail, a plant A for waste thermolysis generally comprises a support structure C for at least the reactor B, to which the waste is fed through an inlet port D from a first conveyor belt E.

The reactor B has a substantially cylindrical configuration, is inclined by a predefined angle and is motorised for rotating about an axis thereof, so as to enable mixing and forward conveyance of the waste fed inside the reactor.

The reactor B rotates about its axis in both a clockwise and counterclockwise direction under the action of a respective motor drive assembly F.

The reactor B is reinforced internally by a grid of curved metal bars G, welded to the interior cylindrical wall; the latter is lined with refractory elements H positioned between the bars G of the grid and disposed flush therewith, so as to insulate the reactor B.

The bars G of the grid are suitably associated with a plurality of projecting elements I projecting inside the reactor B, distributed like a worm thread and suitable for facilitating the mixing and forward conveyance of the waste during rotation of the reactor B.

The projecting elements I can have for example a flattened blade-like shape.

The catalyst 1 is suitably placed inside the reactor B, and can have any configuration, provided that it is placed in direct contact with the waste. For example, the catalyst 1 may form the surface lining of inner parts of the reactor B placed in direct contact with the waste.

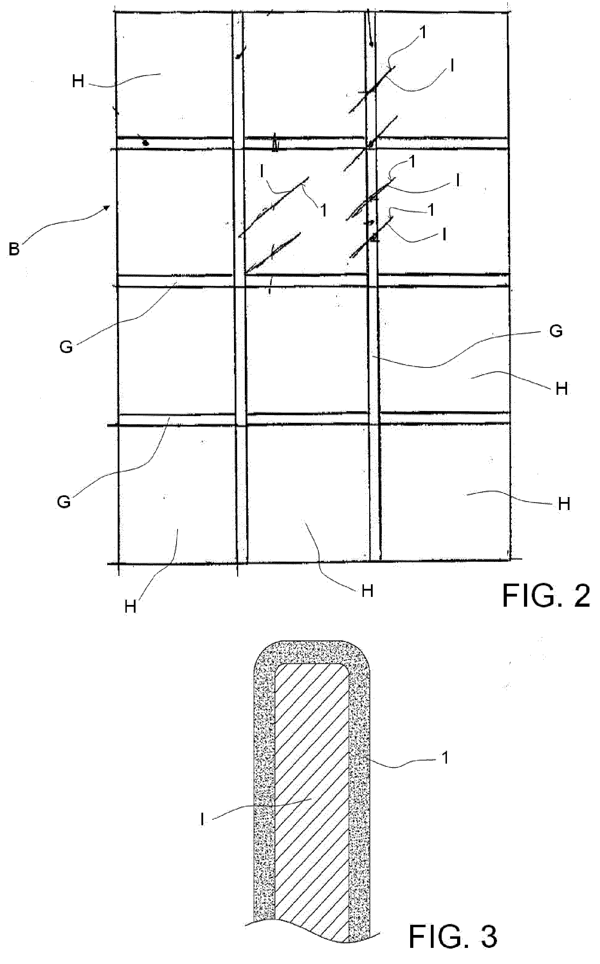

In particular, the catalyst 1 can form the surface lining of the aforesaid projecting elements I, as shown in figure 3; or it can form the surface lining of the refractory elements H for insulating the reactor B.

The catalyst lining 1 can be obtained by directly immersing the part to be lined in the molten bath of selenium and bismuth in the percentages specified earlier.

As an alternative, inner parts of the reactor B, placed in direct contact with the waste, can be made entirely of the same alloy as the catalyst 1.

The reactor B has a controlled atmosphere; in particular, a reducing environment is created inside it, substantially in the absence of oxygen, so as to optimise the thermolysis process and at the same time avoid the formation of dioxin and other harmful substances. Moreover, owing to a first gas-type burner L associated with the reactor B, the internal temperature of the reactor B is maintained at a predefined value suitable for thermolysis, ranging between 300°C and 400°C: in this manner, the waste is not combusted and the organic fraction thereof is completely dissociated with the thermolytic process.

The presence of the catalyst 1 inside the reactor B (as a lining or as the material actually used to make inner parts of the reactor B) in a reducing environment accelerates the breaking of the bonds of the organic molecules, thereby transforming them into increasingly simple molecules, i.e. it facilitates thermolysis of the organic fraction of the waste.

In particular, based on tests conducted, in the presence of the catalyst 1, the waste thermolysis cycle has a duration of about two hours.

With thermolysis, as noted, reusable gaseous hydrocarbon mixtures and carbonous material are obtained from the organic fraction of the waste.

Downstream of the reactor B there is situated a tank M for collecting the carbonous material; the tank M comprises nozzles N, which aid in shifting the carbonous material toward the extraction belt 0, which also picks up glass, tins, metal and other inorganic material from the bottom of said tank; everything is thus easily stored and transported outside the tank M.

The fumes deriving from the thermolysis are conveyed to a chimney P. Before the exit of the chimney P a second burner Q allows any organic residues and harmful substances contained in the fumes to be reduced. The necessary high temperature inside the chimney, equal to about 1200°C, is also ensured owing to the continuous inflow of air (and thus of oxygen) provided by a fan R. The gaseous hydrocarbon mixtures obtained by thermolysis are used directly inside the plant A, that is, they are combusted to keep constant the operating temperature required in the reactor B, thus reducing the consumption of external fuel needed to supply the first burner L.

The carbonous material collected in the tank M at the end of the cycle can be sold as fuel, for example to cement factories or industrial plants of various types for heat/energy production.

The waste can undergo a pre-selection before entering the plant A, so as to feed the reactor B only with organic waste of plant or animal origin and obtain therefrom the aforesaid reusable combustible products by thermolysis.

If the waste is not pre-selected, any inorganic materials (e.g. glass, tins or metal) present can then be recovered in tank M once the thermolysis cycle has ended and thus recycled.

The functioning of the catalyst 1, according to the invention as described, is wholly intuitive.

The invention thus conceived enables important technical advantages to be obtained.

An important technical advantage consists, as seen, in that the selenium and bismuth alloy catalyst 1 makes it possible to significantly accelerate the waste thermolysis cycle, thus enabling reusable combustible products to be obtained therefrom in much shorter times compared to those normally necessary.

Consequently, the catalyst also enables the operating costs of waste thermolysis plants A to be reduced; one need only consider the amount of savings, with such brief thermolysis cycles, in terms of the external fuel needed to supply the first burner L for heating of the reactor B.

It has thus been seen how the invention fully achieves the predefined task and objects.

The present invention shall be carried out in strict observance of the legislative and regulatory provisions concerning the products which form the subject matter of the invention or are related thereto and subject to authorisation, where necessary, of the competent authorities, with particular reference to regulations connected to safety, environmental pollution and health.

## Claims

1. Use of a catalyst for waste thermolysis, **characterised in that** the catalyst comprises at least a selenium and bismuth alloy suitable for accelerating the thermolytic process of waste in plants (A) for waste disposal by thermolysis, so as to quickly obtain reusable combustible products.

2. Use of a catalyst according to claim 1, **characterised in that** the catalyst is obtained by melting selenium and bismuth in a crucible.

3. Use of a catalyst according to any preceding claim, **characterised in that** the catalyst forms the surface lining of inner parts of the reactor (B) of the thermolysis plant (A), said parts being placed directly in contact with waste.

4. Use of a catalyst according to any preceding claim, **characterised in that** the catalyst forms the surface lining of inner projecting elements (I) of the reactor (B), said projecting elements (I) being suitable for waste mixing during the thermolytic process.

5. Use of a catalyst according to any preceding claim, **characterised in that** the catalyst forms the surface lining of refractory elements (H) for insulating the internal wall of the reactor (B).

6. Use of a catalyst according to any preceding claim, **characterised in that** the catalyst forms inner parts of the reactor (B) placed directly in contact with waste.

## Patentansprüche

1. Verwendung eines Katalysators zur Abfallthermolyse, **dadurch gekennzeichnet, dass** der Katalysator mindestens eine Selen- und eine Bismutlegierung umfasst, die geeignet ist, um den Abfallthermolyseprozess in Anlagen (A) zur Abfallbeseitigung durch Thermolyse zu beschleunigen, sodass schnell wiederverwertbare Verbrennungsprodukte erhalten werden können.

2. Verwendung eines Katalysators nach Anspruch 1, **dadurch gekennzeichnet, dass** der Katalysator durch das Schmelzen von Selen und Bismut in einem Schmelztiegel erhalten wird.

3. Verwendung eines Katalysators nach einem der vorhergehenden Ansprüche, **dadurch gekennzeichnet, dass** der Katalysator die Oberflächenverkleidung von inneren Teilen des Reaktors (B) der Thermolyseanlage (A) bildet, wobei diese Teile direkt in Kontakt mit Abfall platziert werden.

4. Verwendung eines Katalysators nach einem der vorhergehenden Ansprüche, **dadurch gekennzeichnet, dass** der Katalysator die Oberflächenverkleidung von inneren hervorstehenden Elementen (I) des Reaktors (B) bildet, wobei diese hervorstehenden Elemente (I) geeignet sind, um Abfall während des Thermolyseprozesses zu vermischen.

5. Verwendung eines Katalysators nach einem der vorhergehenden Ansprüche, **dadurch gekennzeichnet, dass** der Katalysator die Oberflächenverkleidung von feuerfesten Elementen (H) zur Isolation der Innenwand des Reaktors (B) bildet.

6. Verwendung eines Katalysators nach einem der vorhergehenden Ansprüche, **dadurch gekennzeichnet, dass** der Katalysator innere Teile des Reaktors (B) bildet, die direkt in Kontakt mit Abfall platziert sind.

## Revendications

1. Utilisation d'un catalyseur pour thermolyse des déchets, **caractérisé en ce que** le catalyseur comprend au moins un alliage de sélénium et de bismuth pouvant accélérer le processus de thermolyse des déchets dans des installations (A) d'élimination des déchets par thermolyse, de sorte à obtenir rapidement des produits combustibles réutilisables.

2. Utilisation d'un catalyseur selon la revendication 1, **caractérisé en ce que** le catalyseur est obtenu en faisant fondre le sélénium et le bismuth dans un creuset.

3. Utilisation d'un catalyseur selon l'une quelconque des revendications précédentes, **caractérisé en ce que** le catalyseur forme le revêtement de surface des parties internes du réacteur (B) de l'installation de thermolyse (A), lesdites parties étant placées directement en contact avec les déchets.

4. Utilisation d'un catalyseur selon l'une quelconque des revendications précédentes, **caractérisé en ce que** le catalyseur forme le revêtement de surface des éléments internes en saillie (I) du réacteur (B), lesdits éléments en saillie (I) étant adaptés au mélange des déchets lors du processus de thermolyse.

5. Utilisation d'un catalyseur selon l'une quelconque des revendications précédentes, **caractérisé en ce que** le catalyseur forme le revêtement de surface des éléments réfractaires (H) servant à isoler la cloison interne du réacteur (B).

6. Utilisation d'un catalyseur selon l'une quelconque des revendications précédentes, **caractérisé en ce que** le catalyseur forme des parties internes du réacteur (B) placées directement en contact avec les déchets.
